# EUROPÄISCHE PATENTANMELDUNG

(11) **EP 4 661 150 A1**
(43) Veröffentlichungstag der Anmeldung: **10.12.2025**
(21) Anmeldenummer: 24180817.9
(22) Anmeldetag: 07.06.2024
(51) Int. Cl.: H01M 10/42, H01M 10/48, H01M 50/209, H01M 50/249, B60L 3/00, B60L 58/10, G01L 9/12

(54) **BATTERIEÜBERWACHUNGSEINRICHTUNG UND BATTERIE MIT BATTERIEÜBERWACHUNGSEINRICHTUNG**

(71) Anmelder: AUMOVIO Germany GmbH, 60488 Frankfurt am Main (DE)
(72) Erfinder: Rink, Klaus, 30175 Hannover (DE); Varoquie, Bertrand, 31100 Toulouse (FR)
(74) Vertreter: Aumovio Corporation

(57) **Zusammenfassung**

Die Erfindung betrifft eine Batterieüberwachungseinrichtung (36) für eine Batterie (10), wobei die Batterie (10) mehrere Batteriezellen (12) aufweist, wobei die Batterieüberwachungseinrichtung (36) zwischen benachbarten Batteriezellen (12) zumindest ein flächiges Messelement (38) aufweist, das derart zwischen zwei benachbarten Batteriezellen (12) angeordnet werden kann, dass das Messelement (38) eine Formänderung zumindest einer der Batteriezellen (12) erfassen kann, wobei das Messelement (38) eine Verformung, und/oder eine Kraft und/oder einen Druck, der auf das Messelement (38) wirkt, erfassen kann, und mit einer Auswerteschaltung (40), die mit dem zumindest einen Messelement (38) verbunden ist, wobei das Messelement (38) einen auf der erfassten Verformung, Kraft und/oder dem erfassten Druck basierenden Messwert oder ein Signal an die Auswerteschaltung (40) ausgeben kann, und die Auswerteschaltung (40) den zumindest einen Messwert oder das Signal mit einem Grenzwert für diesen Messwert oder das Signal vergleichen und bei Überschreiten zumindest eines Grenzwertes ein Fehlersignal ausgeben kann.

Die Erfindung betrifft des Weiteren eine Batterie (10) mit einer solchen Batterieüberwachungseinrichtung (36)

## Beschreibung

Die Erfindung betrifft eine Batterieüberwachungseinrichtung für eine Batterie, insbesondere eine Fahrzeugbatterie, wobei die Batterie mehrere Batteriezellen aufweist. Die Erfindung betrifft des Weiteren eine Batterie mit einer solchen Batterieüberwachungseinrichtung.

Batterien für Fahrzeuge, insbesondere für Elektrofahrzeuge, weisen üblicherweise mehrere Batteriezellen auf. Die einzelnen Batteriezellen sind üblicherweise dicht gepackt und durch Trennelemente, die beispielsweise thermische oder elektrische Isolationseigenschaften haben, voneinander getrennt. Insbesondere im Fahrzeugbereich ist es wichtig, Fehlfunktionen, insbesondere Überhitzungen, beispielsweise ein "thermisches Durchgehen", bei dem es zu einem schnellen und unkontrollierten Temperaturanstieg kommen kann, rechtzeitig zu erkennen bzw. vorherzusagen und Gegenmaßnahmen einleiten zu können.

Aus dem Stand der Technik sind Batterieüberwachungseinrichtung bekannt, um die korrekte Funktion der Batterie überwachen und Fehlfunktionen der Batterie oder einzelner Batteriezellen rechtzeitig erkennen zu können, um für das Fahrzeug kritische Zustände zu vermeiden. Üblicherweise überwachen diese Batterieüberwachungseinrichtungen den Batteriestrom, die Batteriespannung der Batterie und/oder der einzelnen Batteriezellen, um beispielsweise Veränderungen im Batteriestrom und oder der Batteriespannung, die auf eine Fehlfunktion der Batterie hinweisen könnten, zu erfassen. Des Weiteren wird die Temperatur der Batterie und/oder der einzelnen Batteriezellen erfasst, um eine unnormale Erwärmung der Batterie rechtzeitig erkennen und Gegenmaßnahmen einleiten zu können.

Aufgabe der Erfindung ist es, eine Batterieüberwachungseinrichtung bereitzustellen, die eine schnelle und zuverlässige Erkennung bzw. Vorhersage von Fehlfunktion der Batterie ermöglicht. Aufgabe der Erfindung ist es des Weiteren eine Batterie mit einer solchen Batterieüberwachungseinrichtung bereitzustellen.

Zur Lösung der Aufgabe ist eine Batterieüberwachungseinrichtung für eine Batterie vorgesehen, wobei die Batterie mehrere Batteriezellen aufweist, wobei die Batterieüberwachungseinrichtung zwischen benachbarten Batteriezellen zumindest ein flächiges Messelement aufweist, das derart zwischen zwei benachbarten Batteriezellen angeordnet werden kann, dass das Messelement eine Formänderung zumindest einer der Batteriezellen erfassen kann, wobei das Messelement eine Verformung, und/oder eine Kraft und/oder einen Druck, der auf das Messelement wirkt, erfassen kann. Die Batterieüberwachungseinrichtung weist des Weiteren eine Auswerteschaltung auf, die mit dem zumindest einen Messelement verbunden ist, wobei die Messeinrichtung einen auf der erfassten Verformung, Kraft und/oder dem erfassten Druck basierenden Messwert oder ein Signal an die Auswerteschaltung ausgeben kann, und die Auswerteschaltung den zumindest einen Messwert oder das Signal mit einem Grenzwert für diesen Messwert oder das Signal vergleichen und bei Überschreiten zumindest eines Grenzwertes ein Fehlersignal ausgeben kann.

Bei einer Beschädigung der Batteriezelle kann es zu einer Volumenausdehnung innerhalb der Batteriezelle kommen. Eine solche Ausdehnung einer Batteriezelle ist somit ein zuverlässiges Anzeichen für eine bevorstehende Fehlfunktion oder eine Beschädigung der Batteriezelle. Beispielsweise kann die Volumenausdehnung durch Gase hervorgerufen werden, die sich durch den Temperaturanstieg innerhalb der Batteriezelle entwickeln. Durch eine schnelle und rechtzeitige Erfassung auch kleiner Volumenausdehnungen kann somit frühzeitig eine Beschädigung einer Batteriezelle erkannt beziehungsweise vorhergesagt werden.

Die Erfindung stellt eine Batterieüberwachungseinrichtung bereit, die eine schnelle und zuverlässige Erfassung von Volumenänderungen der Batteriezellen erkennt. Hierzu sind in die zwischen den Batteriezellen angeordneten Trennelement Messeinrichtung integriert, die Verformungen der benachbarten Batteriezellen erfassen können, beispielsweise durch Messung der Verformung oder eine Erfassung einer Änderung der auf das Trennelement und somit das Messelement wirkenden Drücke oder Kräfte.

Beispielsweise ist das Messelement in ein zwischen den Batteriezellen angeordnetes Trennelement integriert ist, wobei das Trennelement eine thermische und/oder elektrische Isolation zwischen den Batteriezellen bereitstellen kann.

Das Messelement kann beispielsweise zumindest eine dehnungsmessende Struktur aufweisen, die eine Verformung des Messelement und/oder der an das Messelement angrenzenden Batteriezelle messen kann. Beispielsweise ist das Trennelement und somit das Messelement auf zumindest eine benachbarte Zelle aufgeklebt oder derart mit dieser verbunden, dass eine Formänderung der benachbarten Batteriezelle zu einer Verformung des Messelements führt, die mit der dehnungsmessenden Struktur erfasst werden kann. Dadurch ist eine einfache und schnelle Erfassung einer Formänderung der benachbarten Batteriezellen möglich.

Die dehnungsmessende Strukturen kann beispielsweise durch zumindest einen Dehnungsmessstreifen, einen Oberflächenwellenwandler oder einen magnetischen Sensoren gebildet sein. Der magnetische Sensor kann durch Lageänderung einer magnetischen Struktur relativ zu einem Magnetsensor, beispielsweise einen Hallsensor oder einem Fluxgate realisiert sein.

Um eine Verformung einfacher erfassen zu können, kann das Trennelement im Bereich der dehnungsmessenden Struktur geschwächt, beispielsweise dünner ausgebildet sein, so dass sich das Trennelement einer Verformung einen geringen Widerstand entgegen setzt und sich das Trennelement einfacher gemeinsam mit der Batteriezelle verformen kann.

Die dehnungsmessende Struktur kann vorgefertigt und beispielsweise in das Trennelement einlaminiert oder auf dieses aufgeklebt sein. Alternativ kann die Struktur auf das Trennelement aufgedruckt werden, beispielsweise durch elektrisch leitfähige Tinte, oder vorab auf einen Träger aufgebracht werden, beispielsweise eine biegbare Flexfolie mit Leiterbahnen, auf die beispielsweise eine magnetische Struktur aufgeklebt ist und die magnetischen Sensoren mit den Leiterbahnen kontaktiert werden.

Der elektrische Anschluss der dehnungsmessenden Struktur, wie auch anderer, im folgenden beschriebenen Ausführungsformen des Messelements, erfolgt vorzugsweise am Rand des Trennelement bzw. außerhalb des zwischen den Batteriezellen gebildeten Spaltes, in dem das Trennelement angeordnet ist, um zu vermeiden, dass es durch die Kontaktierung und/oder die Auswerteschaltung zu Beeinflussungen der Messergebnisse kommt.

Optional oder zusätzlich kann das Messelement zumindest einen Hohlraum aufweisen, der mit einem Medium gefüllt, sowie eine mit dem zumindest einen Hohlraum verbundene Messeinrichtung, insbesondere eine Druckmesseinrichtung, die eine Volumenänderung des Hohlraums /oder eine Druckänderung des Mediums erfassen kann. Das Medium kann ein Gas oder ein Fluid sein, beispielsweise ein inkompressibles Fluid. Bei einer Verformung der Batteriezellen, insbesondere einer Ausdehnung der Batteriezellen drücken diese auf das Trennelement, so dass es im Hohlraum zu einem Druckanstieg und/oder einer Verdrängung des Mediums aus dem Hohlraum kommt. Der Druckanstieg und/oder die Volumenverdrängung können erfasst und daraus eine Verformung der angrenzenden Batteriezellen abgeleitet werden. Dadurch ist eine einfache und schnelle Erfassung von Verformungen möglich. Insbesondere kann durch einen entsprechend großen Hohlraum, der sich beispielsweise über den gesamte Raum zwischen den Batteriezellen erstreckt, beliebige Verformungen der Batteriezelle mit nur einem Messelement erfasst werden. Insbesondere können an einem Trennelement bzw. an einem Messelement auch mehrere Hohlräume vorgesehen sein.

Die Messeinrichtung ist vorzugsweise ebenfalls außerhalb des Spaltes zwischen den Batteriezellen angeordnet. Beispielsweise kann für jedes Messelement eine separate Messeinrichtung vorgesehen sein, so dass jeder Spalt zwischen benachbarten Batteriezellen separat überwacht werden kann. Dadurch kann eine genauere Überwachung der einzelnen Batteriezellen erfolgen, da die Verformungen der Batteriezellen separat erfasst werden können. Zudem ermöglicht kann so genau festgestellt werden, welche Batteriezelle beschädigt ist, um diese beispielsweise schnell austauschen zu können.

Optional kann auch eine gemeinsame Messeinrichtung, insbesondere eine gemeinsame Druckmesseinrichtung, für mehrere Messelemente, insbesondere für mehrere Hohlräume, vorgesehen sein. Dadurch kann der Aufbau der Batterieüberwachungseinrichtung einfacher gestaltet werden.

Die gemeinsame Messeinrichtung, insbesondere die gemeinsame Druckmesseinrichtung kann separate Eingänge für zumindest zwei Hohlräume aufweisen, wobei die zumindest zwei Hohlräume separat, insbesondere über separate Leitungen oder Schläuche mit der Messeinrichtung, insbesondere der Druckmesseinrichtung verbunden sind. Dadurch kann auch mit einer Messeinrichtung eine separate Überwachung der einzelnen Hohlräume erfolgen.

Alternativ kann die Messeinrichtung, insbesondere die Druckmesseinrichtung zumindest einen gemeinsamen Eingang für zumindest zwei Hohlräume aufweisen, wobei zumindest zwei Hohlräume über eine gemeinsame Leitung oder einen gemeinsamen Schlauch mit der Messeinrichtung, insbesondere der Druckmesseinrichtung, verbunden sind. Dadurch kann der Aufbau der Batterieüberwachungseinrichtung einfacher gestaltet werden.

Die Genauigkeit der Batterieüberwachungseinrichtung durch die Auswahl einer Messeinrichtung mit einer entsprechend hohen Messgenauigkeit und/oder Messauflösung eingestellt werden. Durch eine höhere Messauflösung können beispielsweise bereits kleine Verformungen der Batteriezellen erfasst werden, so dass eine bessere und frühzeitigere Vorhersage einer Fehlfunktion möglich ist.

Um bei einer gemeinsamen Messeinrichtung eine ähnlich hohe Genauigkeit wie bei getrennten Messeinrichtungen zu erhalten, kann es aufgrund des höheren Volumens der mehreren Hohlräume erforderlich sein, eine Messeinrichtung mit einer höheren Messgenauigkeit und/oder Messauflösung zu verwenden.

Die Hohlräume können über separate Leitungen oder Schläuche mit dem gemeinsamen Eingang verbunden sind. Beispielsweise werden die separaten Leitungen oder Schläuche kurz vor dem gemeinsamen Eingang in einem Knotenpunkt zusammengeführt, wobei durch die Auswahl eines entsprechenden Knotenpunktes eine beliebige Erweiterung oder Ergänzung durch zusätzliche Messelemente oder ein Austausch einzelner Messelemente möglich sein kann.

Alternativ können die Hohlräume auch über eine gemeinsame Leitung oder einen gemeinsamen Schlauch mit dem gemeinsamen Eingang verbunden sein. Beispielsweise ist die Leitung oder der Schlauch mäanderförmig an den Hohlräumen vorbeigeführt bzw. verlegt.

Die Messeinrichtung, insbesondere die Druckmesseinrichtung kann in der Auswerteschaltung vorgesehen sein.

Das Messelement kann auch zwei beabstandete Messplatten aufweisen, sowie eine Messanordnung, die den Abstand zwischen den Messplatten überwacht und bei Unterschreiten eines Mindestabstandes zwischen den Messplatten ein Signal an die Auswerteschaltung ausgibt. Beispielsweise weisen die Messplatten einen geringen Abstand zueinander im Bereich von mehreren Millimeter, beispielsweise 2mm, auf. Bei einer Ausdehnung der angrenzenden Batteriezellen werden die Messplatten gegeneinander gedrückt und der Abstand zwischen den Messplatten reduziert, so dass auf einfache Weise durch Überwachung dieses Abstandes eine Verformung bzw. Ausdehnung der Batteriezellen erfasst werden kann.

Die Messplatten können elektrische Kontaktplatten sein und bei Unterschreiten des Mindestabstandes wird ein elektrischer Kontakt zwischen den Kontaktplatten hergestellt. Dadurch kann ein Stromkreis geschlossen werden, durch den ein Signal an die Auswerteschaltung ausgegeben wird.

Alternativ kann zwischen den Messplatten ein Kondensator angeordnet sein bzw. durch die Messplatten gebildet sein. Durch eine Ausdehnung der Batteriezellen verringert sich der Abstand der Messplatten und somit die Kapazität des Kondensators. Diese Veränderung kann durch eine außerhalb der Batteriezellen vorhandene Elektronik, beispielsweise einen Schwingkreis bzw. dessen Frequenzveränderung erfasst und ausgewertet werden. Zwischen den Kondensatorplatten kann ein flexibles Dielektrikum vorgesehen sein, das beim Anschwellen der Batteriezellen zusammengedrückt wird, so dass sich mit dem geringer werdenden Abstand der Kondensatorplatten die Kapazität verändert.

Am Messelement und/oder der Auswerteschaltung kann zusätzlich ein Temperaturmesselement vorgesehen sein und es erfolgt eine temperaturabhängige Anpassung der Messwerte und/oder der Grenzwerte. Dadurch kann eine genauere Erfassung von Verformungen erfolgen. Beispielsweise kann das Volumen eines Mediums in einem der oben beschriebenen Hohlräume und somit der Druck in diesem Hohlraum temperaturabhängig sein. Durch die Berücksichtigung der Temperatur können solche temperaturabhängigen Effekte berücksichtigt, beispielsweise kompensiert, werden.

Zur Lösung der Aufgabe ist des Weiteren eine Batterie vorgesehen, insbesondere eine Fahrzeugbatterie, mit mehreren Batteriezellen und mit einer vorstehend beschriebenen Batterieüberwachungseinrichtung, wobei zwischen zumindest zwei benachbarten Batteriezellen ein Messelement der Batterieüberwachungseinrichtung angeordnet ist.

Das Messelement liegt vorzugsweise jeweils an den benachbarten Batteriezellen flächig an, so dass Verformungen unverzüglich erfasst werden können. Optional kann das Messelement einen definierten geringen Abstand aufweisen, wobei der Abstand so gewählt ist, dass Verformungen ab einem definierten Grenzwert zuverlässig erfasst werden können.

Das Messelement kann beispielsweise zentrisch zwischen den Batteriezellen angeordnet sein bzw. in einem Punkt, an dem mit der größten oder frühstens Verformung zu rechnen ist.

Vorzugsweise Messelement eine Spalt zwischen den Batteriezellen vollständig aus, so dass jede Verformung der Batteriezellen erfasst wird.

Das Messelement kann auf zumindest eine der benachbarten Batteriezellen aufgebracht, insbesondere stoffschlüssig mit dieser verbunden sein. Dies kann vorteilhaft sein, falls Verformungen erfasst werden ,beispielsweise mit einer dehnungsmessenden Struktur. Da sich Formänderungen der Batteriezelle unmittelbar auf das Messelement auswirken.

Die Batterie kann ein Batteriemanagementsystem aufweisen und die Auswerteschaltung ist mit Batteriemanagementsystem verbunden und/oder in das Batteriemanagementsystem integriert. Zum einen können die Messwerte im Batteriemanagementsystem ausgewertet und mit anderen Messwerten des Batteriemanagementsystems verglichen oder verarbeitet werden. Zum anderen sind eine umgehende Verarbeitung eines Fehlersignals und eine Einleitung von Maßnahmen durch das Batteriemanagementsystem möglich.

Weitere Vorteile und Merkmal ergeben sich aus der nachfolgenden Beschreibung in Verbindung mit den beigefügten Zeichnungen. In diesen zeigen:
- Figur 1: eine Explosionsansicht einer Fahrzeugbatterie aus dem Stand der Technik;
- Figur 2: eine Detailansicht der Batteriezellen der Fahrzeugbatterie;
- Figur 3: eine Detailansicht der Batteriezellen aus Figur 2 in deformiertem Zustand einer Batteriezelle;
- Figur 4: eine erste Ausführungsform einer Batterieüberwachungseinrichtung zur Überwachung der Batterie aus Figur 1 ;
- Figur 5: eine zweite Ausführungsform einer Batterieüberwachungseinrichtung zur Überwachung der Batterie aus Figur 1 ;
- Figur 6: eine dritte Ausführungsform einer Batterieüberwachungseinrichtung zur Überwachung der Batterie aus Figur 1;
- Figur 7: eine vierte Ausführungsform einer Batterieüberwachungseinrichtung zur Überwachung der Batterie aus Figur 1;
- Figur 8: eine Variante der Batterieüberwachungseinrichtung aus Figur 7;
- Figur 9: die Batterieüberwachungseinrichtung aus Figur 7 in eingebautem Zustand;
- Figur 10: eine fünfte Ausführungsform einer Batterieüberwachungseinrichtung zur Überwachung der Batterie aus Figur 1;
- Figur 11: die Batterieüberwachungseinrichtung aus Figur 10 mit einer deformierten Batteriezelle;
- Figur 12: eine sechse Ausführungsform einer Batterieüberwachungseinrichtung zur Überwachung der Batterie aus Figur 1; und
- Figur 13: die Batterieüberwachungseinrichtung aus Figur 12 mit einer deformierten Batteriezelle.

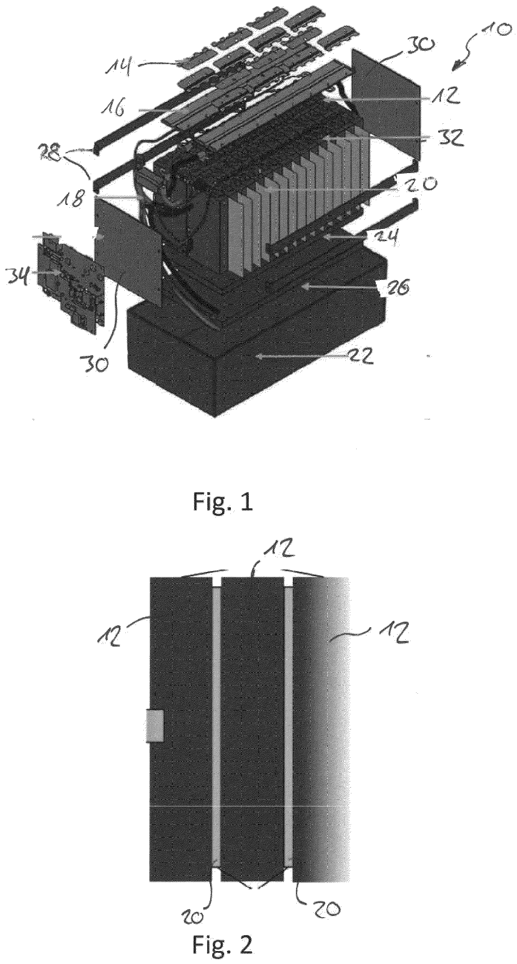

In Figur 1 ist eine Batterie 10, insbesondere eine Fahrzeugbatterie für ein Elektrofahrzeug, gezeigt. Die Batterie 10 hat mehrere Batteriezellen 12, die in der hier gezeigten Ausführungsform im wesentlichen plattenförmig ausgebildet und nebeneinander angeordnet sind. Die Batteriezellen 12 sind über Busbars 14, die auf einem Busbarhalter 16 angeordnet ist, elektrisch miteinander verbunden, so dass die Batteriezellen 12 gemeinsam über die Busbars 14 oder mit dem Busbars 14 elektrisch verbundenen Kontakte oder Kabel 18 kontaktiert werden können. Zwischen den Batteriezellen 12 sind Trennelemente 20 vorgesehen, die beispielsweise eine thermische und/oder eine elektrische Isolierung zwischen den Batteriezellen 14 herstellen (siehe auch Figur 2). Die Batteriezellen 14 sind in einem Gehäuse 22 angeordnet, wobei in dem Gehäuse 22 des Weiteren eine Kühlplatte 24 zur Abführung von Wärme sowie einen Basisplatte 26, mehrere Seitenteile 28 sowie Endplatten 30 zur Fixierung der Batteriezellen 12 vorgesehen sind. Des Weiteren sind eine Spannungs- sowie Temperaturmesseinrichtung 32 zur Batteriediagnose sowie ein Batteriemanagementsystem 34 vorgesehen.

Im Betrieb des Fahrzeugs muss die Batterie 10 sehr genau überwacht werden. Dies dient zum einen der Aufrechterhaltung der Fahrzeugfunktionen. Hierzu werden beispielsweise permanent der Ladezustand und weitere Parameter der Batterie 10, beispielsweise die Temperatur, erfasst, um einen möglichst genaue Informationen über den Ladezustand und den Gesundheitszustand zu erhalten.

Darüber hinaus muss das Entstehen von Fehlerzustände, insbesondere kritischen Fehlerzustände, der Batterie 10 rechtzeitig erkannt beziehungsweise vorhergesagt werden, um rechtzeitig Gegenmaßnahmen einleiten zu können. Insbesondere die Temperaturentwicklung innerhalb der Batteriezellen 12 muss hierbei permanent überwacht werden, um eine Überhitzung der Batterie 10, beispielsweise ein sogenanntes "thermisches Durchgehen" der Batterie 10, bei dem es zu einem schnellen und unkontrollierten Temperaturanstieg kommen kann, rechtzeitig zu erkennen bzw. vorherzusagen. Die Überwachung erfolgt ebenfalls durch die mit dem Batteriemanagementsystem 34 verbundene Spannungs- sowie Temperaturmesseinrichtung 32.

Des Weiteren ist eine nachfolgend im Detail beschriebene Batterieüberwachungseinrichtung 36 vorgesehen, die teilweise in die Trennelemente 20 integriert ist.

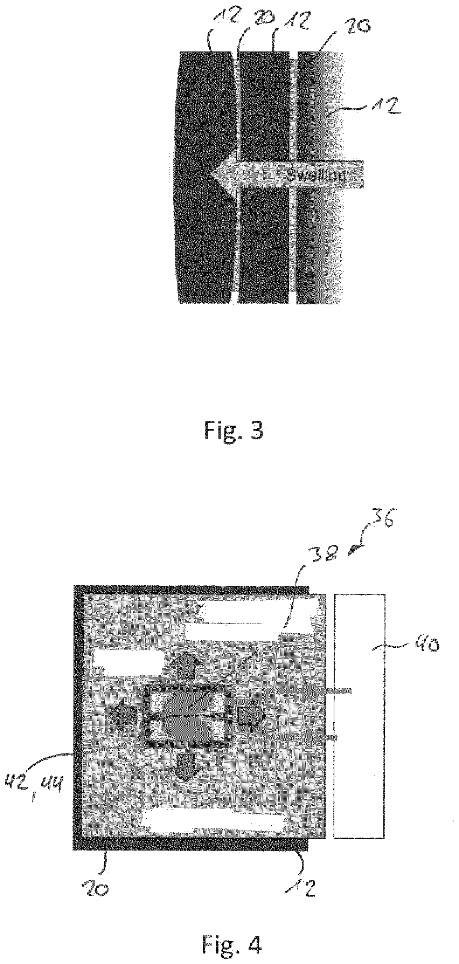

Bei einer Fehlfunktion der Batteriezelle 12 kann es zu einem Druckanstieg bzw. einer Volumenausdehnung innerhalb der Batteriezelle kommen, beispielsweise durch Gase, die sich durch einen Temperaturanstieg innerhalb der Batteriezelle entwickeln. Ein solcher Druckanstieg führt zu einer äußerlichen Verformung der Batteriezelle 12 (siehe Figur 3). Eine solche Ausdehnung einer Batteriezelle 12 ist somit ein zuverlässiges Anzeichen für eine Fehlfunktion oder eine Beschädigung der Batteriezelle 12. Durch eine schnelle und rechtzeitige Erfassung auch kleiner Volumenausdehnungen kann eine solche Fehlfunktion somit frühzeitig eine Beschädigung einer Batteriezelle erkannt beziehungsweise vorhergesagt werden.

Die Batterieüberwachungseinrichtung 36 weist hierzu Messelemente 38 auf, die in die einzelnen Trennelemente integriert sind und eine Verformung der Batteriezellen und/oder eine Veränderung eines Drucks oder einer Kraft, die auf das Trennelement wirkt, erfassen kann. Die Messelemente 38 sind jeweils mit einer Auswerteschaltung 40 verbunden, die die von den Messelementen 38 empfangenen Messwerte verarbeitet und bei Überschreiten von vorab festgelegten Grenzwerten für die Messwerte, also für die Verformung oder einen Druck- bzw. Kraftanstieg, ein Fehlersignal ausgibt, beispielsweise an das Batteriemanagementsystem 34. Das Batteriemanagementsystem 34 oder eine übergeordnete Steuerung, die das Fehlersignal empfängt, kann anschließend geeignete Maßnahmen zur Vermeidung einer weiteren Schädigung der Batterie 10 und/oder eines kritischen Zustandes für das Fahrzeug, einleiten.

In der in Figur 4 gezeigten Ausführungsform weist das Messelement 38 eine dehnungsmessende Struktur 42, in der hier gezeigten Ausführungsform gebildet durch mehrere Dehnungsmessstreifen 42, auf. Das Trennelement 20 ist beispielsweise stoffschlüssig mit zumindest einer angrenzenden Batteriezelle 12 verbunden, beispielsweise verklebt, so dass es bei einer Verformung der Oberfläche der Batteriezelle 12 auch zu einer Verformung des Trennelement 20 kommt, die mit den Dehnungsmessstreifen 42 erfasst und an die Auswerteschaltung 40 ausgegeben wird. Die dehnungsmessende Struktur 42 kann beispielsweise die gesamte Fläche zwischen den Batteriezellen 12 abdecken, so dass jede Verformung der Batteriezelle 12 erfasst werden kann. In der hier gezeigten Ausführungsform können hierzu mehrere, in verschiedene Richtungen angeordnete Dehnungsmessstreifen vorgesehen sein. Optional kann die dehnungsmessende Struktur aber auch nur in einem Bereich vorgesehen sein, in dem mit der größten Verformung zu rechnen ist, beispielsweise im Zentrum der zum Trennelement 20 gerichteten Fläche der Batteriezelle 12.

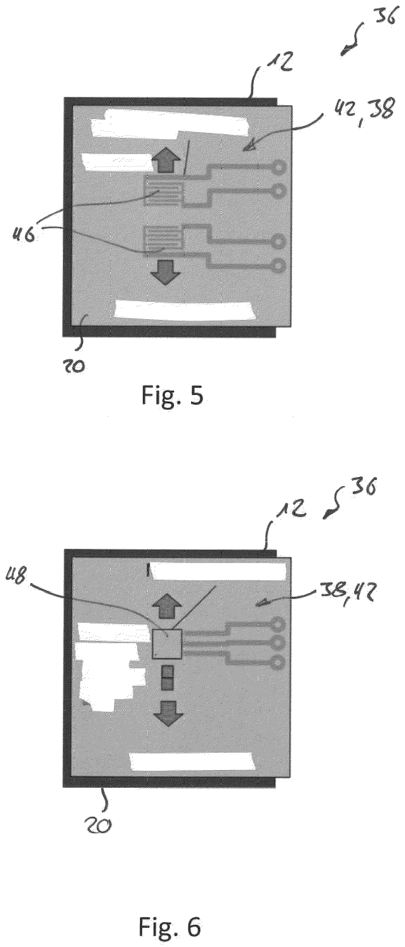

In Figur 5 ist eine alternative Ausführungsform einer dehnungsmessende Struktur 42 vorgesehen, in der Kraftmesseinrichtungen 46 Oberflächenwellen bzw. die durch die Verformung hervorgerufene Änderung der Oberflächenwellen erfassen.

In der in Figur 6 gezeigten Ausführungsform weist die dehnungsmessende Struktur 42 einen magnetischen Sensor 48 auf, der die Veränderung der Position einer magnetischen Struktur aufgrund der Verformung der Batteriezelle 12 und des Trennelement 20 erfasst.

Diese dehnungsmessenden Strukturen 42 vorgefertigt sein und in die Trennelemente 20 einlaminiert oder auf diese aufgeklebt werden. Alternativ können die dehnungsmessenden Strukturen 42 auf das Trennelement 20 aufgedruckt werden, beispielsweise mit elektrisch leitfähiger Tinte, oder vorab auf einen Träger aufgebracht werden, beispielsweise eine biegbare Flexfolie mit Leiterbahnen, auf die beispielsweise magnetische Strukturen aufgeklebt und magnetischen Sensoren mit den Leiterbahnen kontaktiert werden.

Um die Messung von Verformung zu verbessern, kann das Trennelement 20, insbesondere im Bereich der Dehnungsmessenden Strukturen 42 flexibler ausgebildet sein, beispielsweise durch eine Schwächung, eine Material- oder Dickenreduzierung.

Unabhängig von der Ausführung des Messelement 38 sind die Kontakte 50 zur Kontaktierung mit der Auswerteschaltung am Rand des Messelements 38 bzw. am Rand des Trennelements angeordnet und/oder ragen aus dem Spalt, in dem das Trennelement 20 und das Messelement 38 zwischen den Batteriezellen 12 angeordnet sind, heraus, so dass sich nur das Messelement 38 in diesem Spalt befindet. Insbesondere kann die Auswerteschaltung 40 in den vorstehend und nachfolgend beschriebenen Ausführungsformen in eine übergeordnete Steuerung, beispielsweise in das Batteriemanagementsystem 34 integriert sein.

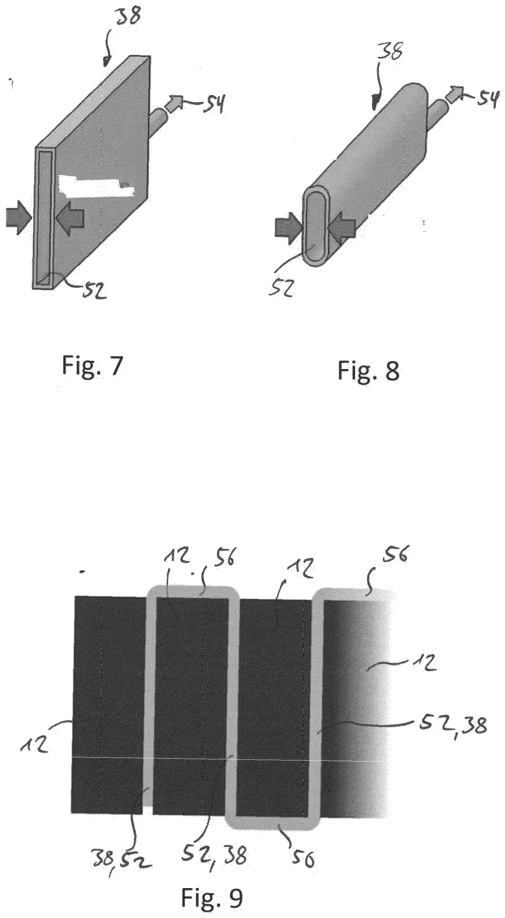

In den Figuren 7 bis 9 ist die Messeinrichtung 38 jeweils durch einen flachen Hohlraum 52 bzw. eine flachen Kammer sowie eine mit dem Hohlraum verbundene Messeinrichtung 54, insbesondere eine Druckmesseinrichtung 54, gebildet. Der Hohlraum ist mit einem Medium, beispielsweise einem Gas oder einem Fluid gefüllt. Die Figuren 7 und 8 zeigen verschiedene mögliche Ausführungsformen eines solchen Hohlraums.

Bei einer Verformung bzw. Ausdehnung einer der benachbarten Batteriezellen 12 kommt es zu einer Volumenreduzierung im Spalt zwischen Batteriezellen 12, so dass der Hohlraum 52 zusammengedrückt wird. Dies führt zu einem Druckanstieg innerhalb des Hohlraums 52 und/oder einem Verdrängen des Medium aus dem Bereich zwischen den Batteriezellen 12. Dies kann mit der Messeinrichtung 54 erfasst werden. Der Grenzwert kann hierbei ein maximaler Druck innerhalb des Hohlraums 52 oder ein definiertes Volumen des aus dem Hohlraum 52 verdrängten Mediums sein.

Für jeden Hohlraum 52 kann eine separate Messeinrichtung 54 vorgesehen sein, so dass jeder spalt zwischen zwei Batteriezellen 12 einzeln überwacht werden kann. Wird ein Fehlersignal ausgeben, ist somit auch eine genaue Information möglich, welche Batteriezelle beschädigt oder defekt ist.

Alternativ kann eine gemeinsame Messeinrichtung 54 für mehrere Hohlräume 52 vorgesehen sein, wobei diese Messeinrichtung 54 separate Eingänge für die einzelnen Hohlräume 52 aufweisen kann ,so dass mit einer Messeinrichtung 54 eine separate Überwachung der einzelnen Hohlräume 52 erfolgen kann.

Optional können die Hohlräume auch vor der Messeinrichtung 54 zusammengeführt werden und die Messeinrichtung 54 weist einen gemeinsamen Eingang für mehrere Hohlräume 54 auf. In einer solchen Ausführungsform kann es erforderlich sein, dass die Messeinrichtung eine höhere Genauigkeit oder Auflösung aufweist, da durch das größere zusammenhängende Volumen eine Volumenänderung eines Hohlraumes 52 eine geringe Druckänderung hervorruft.

Die Zusammenführung der Hohlräume 52 kann hierbei auf verschiedene Weise erfolgen. Beispielsweise kann von jedem Hohlraum 52 eine Leitung oder ein Schlauch zu einem gemeinsamen Knoten vor der Messeinrichtung 52 führen, an dem die Leitungen oder Schläuche zusammengeführt werden. Optional können die Hohlräume auch mäanderförmig durch Leitungen oder Schläuche 56 miteinander verbunden sein (Figur 9).

Die Leitungen oder Schläuche, mit denen die Hohlräume 52 untereinander und/oder mit der Messeinrichtung 54 verbunden sind, könne verschiedene Querschnitte aufweisen, beispielsweise runde, ovale oder rechteckige Querschnitte. Insbesondere können die Querschnitte auch variieren.

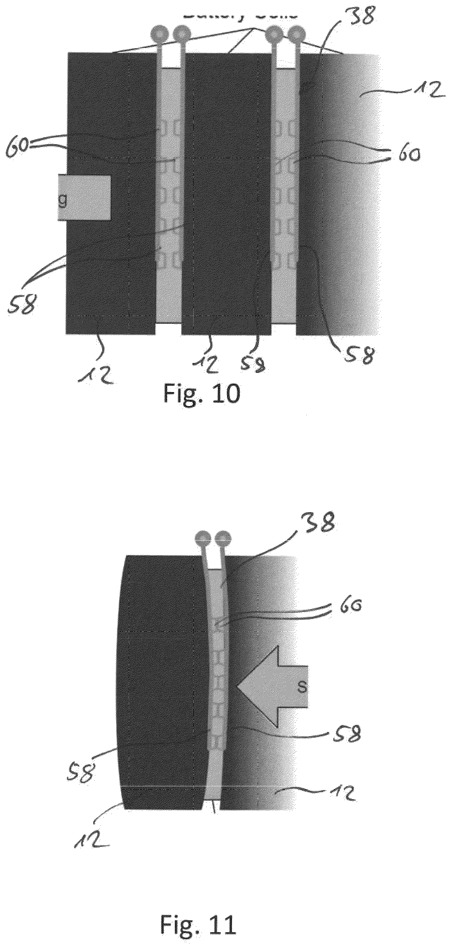

In den Figuren 10 und 11 ist das Messelement durch zwei im wesentlichen parallele Messplatten 58 gebildet. Die Messplatten 58 weisen jeweils zueinander vorstehende Kontaktelement 60 auf. In unbelastetem Zustand sind die Kontaktelemente 60 beabstandet von den Kontaktelemente 60 er jeweils andere Messplatte 58. Wird die Breite des Spaltes zwischen den Batteriezellen 12 durch eine Ausdehnung einer der Batteriezellen reduziert, werden die Messplatten 58 aufeinander zu gedrückt, so dass die Abstand der Kontaktelemente 60 reduziert, bis sich die Kontaktelemente 60 der beiden Messplatten 58 berühren. Durch den Kontakt der Kontaktelement 60 wird beispielsweise ein Stromkreis geschlossen, durch den ein Signal an die Auswerteschaltung ausgegeben wird.

Die Kontaktelemente 60 können gleichmäßig verteilt sein oder im Bereich angeordnet sein, in dem mit der größten Verformung zu rechnen ist. Die Messplatten könne aus einem elektrisch leitenden Material ausgebildet sein oder Leiterbahnen aufweisen, die mit den Kontaktelemente 60 verbunden sind.

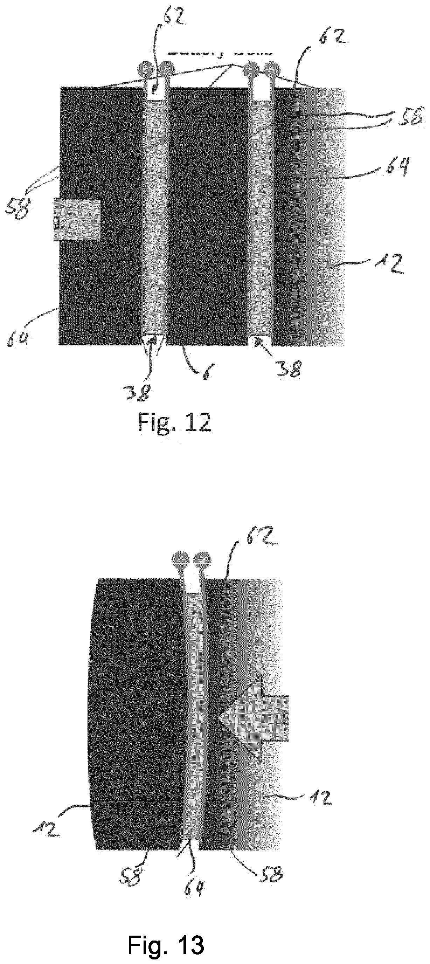

In der in den Figuren 12 und 13 gezeigten Ausführungsform ist zwischen den Messplatten 58 ein Kondensator 62 gebildet. Im Spalt zwischen den Messplatten 58 kann ein insbesondere flexibles Dielektrikum 64 sein. Durch eine Verformung zumindest einer angrenzenden Batteriezelle kommt es zur Verformung zumindest einer der Messplatten 58 und einer Reduzierung des Abstandes der Messplatten 58, und somit zu einer Verformung des Dielektrikums 64, so dass ich die Kapazität des Kondensators 62 ändert. Diese Änderung des Kapazität kann als Messwert an die Auswerteschaltung 40 ausgegeben werden.

## Patentansprüche

1. Batterieüberwachungseinrichtung (36) für eine Batterie (10), wobei die Batterie (10) mehrere Batteriezellen (12) aufweist, wobei die Batterieüberwachungseinrichtung (36) zwischen benachbarten Batteriezellen (12) zumindest ein flächiges Messelement (38) aufweist, das derart zwischen zwei benachbarten Batteriezellen (12) angeordnet werden kann, dass das Messelement (38) eine Formänderung zumindest einer der Batteriezellen (12) erfassen kann, wobei das Messelement (38) eine Verformung, und/oder eine Kraft und/oder einen Druck, der auf das Messelement (38) wirkt, erfassen kann, und mit einer Auswerteschaltung (40), die mit dem zumindest einen Messelement (38) verbunden ist, wobei das Messelement (38) einen auf der erfassten Verformung, Kraft und/oder dem erfassten Druck basierenden Messwert oder ein Signal an die Auswerteschaltung (40) ausgeben kann, und die Auswerteschaltung (40) den zumindest einen Messwert oder das Signal mit einem Grenzwert für diesen Messwert oder das Signal vergleichen und bei Überschreiten zumindest eines Grenzwertes ein Fehlersignal ausgeben kann.

2. Batterieüberwachungseinrichtung nach Anspruch 1, **dadurch gekennzeichnet, dass** das Messelement (38) in ein zwischen den Batteriezellen angeordnetes Trennelement (20) integriert ist.

3. Batterieüberwachungseinrichtung nach einem der Ansprüche 1 und 2, **dadurch gekennzeichnet, dass** das Messelement (38) zumindest eine dehnungsmessende Struktur (42) aufweist, die eine Verformung des Messelement (38) und/oder der an das Messelement (38) angrenzenden Batteriezelle (12) messen kann.

4. Batterieüberwachungseinrichtung nach einem der vorhergehenden Ansprüche, **dadurch gekennzeichnet, dass** das Messelement (38) zumindest einen Hohlraum (52) aufweist, der mit einem Medium gefüllt, sowie eine mit dem zumindest einen Hohlraum (52) verbundene Messeinrichtung (54), insbesondere eine Druckmesseinrichtung, die eine Volumenänderung des Hohlraums /oder eine Druckänderung des Mediums erfassen kann.

5. Batterieüberwachungseinrichtung nach Anspruch 4, **dadurch gekennzeichnet, dass** eine gemeinsame Messeinrichtung (54), insbesondere eine gemeinsame Druckmesseinrichtung, für mehrere Messelemente (38), insbesondere für mehrere Hohlräume (52), vorgesehen ist.

6. Batterieüberwachungseinrichtung nach Anspruch 5, **dadurch gekennzeichnet, dass** die Messeinrichtung (54), insbesondere die Druckmesseinrichtung, separate Eingänge für zumindest zwei Hohlräume (52) aufweist, wobei die zumindest zwei Hohlräume (52) separat, insbesondere über separate Leitungen oder Schläuche mit der Messeinrichtung (54), insbesondere der Druckmesseinrichtung, verbunden sind.

7. Batterieüberwachungseinrichtung nach einem der Ansprüche 5 und 6, **dadurch gekennzeichnet, dass** die Messeinrichtung (42), insbesondere die Druckmesseinrichtung, zumindest einen gemeinsamen Eingang für zumindest zwei Hohlräume (52) aufweist, wobei zumindest zwei Hohlräume (52) über eine gemeinsame Leitung oder einen gemeinsamen Schlauch mit der Messeinrichtung- (54), insbesondere der Druckmesseinrichtung, verbunden sind.

8. Batterieüberwachungseinrichtung nach Anspruch 7, **dadurch gekennzeichnet, dass** die Hohlräume (52) über separate Leitungen oder Schläuche mit dem gemeinsamen Eingang verbunden sind.

9. Batterieüberwachungseinrichtung nach Anspruch 7, **dadurch gekennzeichnet, dass** die Hohlräume (52) über eine gemeinsame Leitung oder einen gemeinsamen Schlauch mit dem gemeinsamen Eingang verbunden sind.

10. Batterieüberwachungseinrichtung nach einem der Ansprüche 4 bis 9, **dadurch gekennzeichnet, dass** die Messeinrichtung (54), insbesondere die Druckmesseinrichtung, in der Auswerteschaltung (40) vorgesehen ist.

11. Batterieüberwachungseinrichtung nach einem der vorhergehenden Ansprüche, **dadurch gekennzeichnet, dass** das Messelement (38) zwei beabstandete Messplatten (58) aufweist, sowie eine Messanordnung, die bei Unterschreiten eines Mindestabstandes zwischen den Messplatten (58) ein Signal an die Auswerteschaltung ausgibt.

12. Batterieüberwachungseinrichtung nach Anspruch 11, **dadurch gekennzeichnet, dass** die Messplatten 58 elektrische Kontaktplatten sind, insbesondere mit vorstehenden Kontaktelementen 60, und bei Unterschreiten des Mindestabstandes ein elektrischer Kontakt zwischen den Kontaktplatten, insbesondere den Kontaktelementen 60 der beiden Messplatten 58, hergestellt wird.

13. Batterieüberwachungseinrichtung nach Anspruch 11, **dadurch gekennzeichnet, dass** zwischen den Messplatten 58 ein Kondensator 62 angeordnet ist.

14. Batterieüberwachungseinrichtung nach einem der vorhergehenden Ansprüche, **dadurch gekennzeichnet, dass** am Messelement (38) und/oder der Auswerteschaltung (40) ein Temperaturmesselement aufweist und eine temperasturabhängige Anpassung der Messwerte, der Signale und/oder der Grenzwerte erfolgt.

15. Batterie (10), insbesondere Fahrzeugbatterie, mit mehreren Batteriezellen (12) und mit einer Batterieüberwachungseinrichtung (36) nach einem der vorhergehenden Ansprüche, wobei zwischen zumindest zwei benachbarten Batteriezellen (12) ein Messelement (38) der Batterieüberwachungseinrichtung (36) angeordnet ist.

16. Batterie nach Anspruch 15, **dadurch gekennzeichnet, dass** das Messelement (38) jeweils an den benachbarten Batteriezellen (12) flächig anliegt.

17. Batterie nach einem der Ansprüche 15 und 16, **dadurch gekennzeichnet, dass** das Messelement (38) eine Spalt zwischen den Batteriezellen (12) vollständig ausfüllt.

18. Batterie nach einem der Ansprüche 15 bis 17, **dadurch gekennzeichnet, dass** das Messelement (38) auf zumindest eine der benachbarten Batteriezellen (12) aufgebracht, insbesondere stoffschlüssig mit dieser verbunden ist.

19. Batterie nach einem der Ansprüche 15 bis 18, **dadurch gekennzeichnet, dass** die Batterie (12) ein Batteriemanagementsystem (34) aufweist und die Auswerteschaltung (40) mit dem Batteriemanagementsystem (34) verbunden und/oder in das Batteriemanagementsystem (34) integriert ist.
